# EUROPEAN PATENT SPECIFICATION

(11) **EP 3 883 094 B1**
(45) Date of publication and mention of the grant of the patent: **04.12.2024**
(21) Application number: 21152667.8
(22) Date of filing: 21.01.2021
(51) Int. Cl.: H02K 1/276, H02K 1/30, H02K 1/32, H02K 7/00

(54) **HORSESHOE-TYPE PM ROTOR FOR MOTOR**
HUFEISENFÖRMIGER DAUERMAGNETROTOR FÜR MOTOR
ROTOR À AIMANTS PERMANENTS DE TYPE FER À CHEVAL POUR MOTEUR

(30) Priority: 19.03.2020 KR 20200033981
(43) Date of publication of application: 22.09.2021
(73) Proprietor: Jung, Myung Ja, Busan 47846 (KR); Lee, Hyung Uk, Ansan-si, Gyeonggi-do 15337 (KR); Lee, Sang Sup, Busan 47846 (KR)
(72) Inventor: Jung, Myung Ja, Busan 47846 (KR); Lee, Hyung Uk, Ansan-si, Gyeonggi-do 15337 (KR); Lee, Sang Sup, Busan 47846 (KR)
(74) Representative: Valet Patent Services Limited

(56) References cited:
- EP-A1- 3 402 045
- DE-A1- 102011 002 327
- DE-A1- 3 023 743
- JP-A- 2011 015 500
- US-A- 3 221 194
- US-A- 4 393 320
- US-A- 4 464 596

## Description

### CROSS-REFERENCE TO RELATED APPLICATION

This application claims the benefit of Korean Patent Application No. 10-2020-0033981 filed on March 19, 2020.

### BACKGROUND

### 1. Technical Field

The present invention relates generally to a thin-plate module horseshoe-type PMG (permanent magnet) rotor for a motor, and more particularly to a thin-plate module horseshoe-type PMG rotor for a motor, according to claim 1, in which a core is divided into an iron core and a pole plate core without being molded and magnets are assembled therebetween.

### 2. Description of the Related Art

Generally, a motor is an actuator that receives electrical energy and converts it into mechanical energy. Such a motor consists of a stator configured to receive electricity and a rotor configured to generate a magnetic field. When current is supplied, Lorentz force is generated in a direction perpendicular to magnetic force, and thus the rotor is rotated.

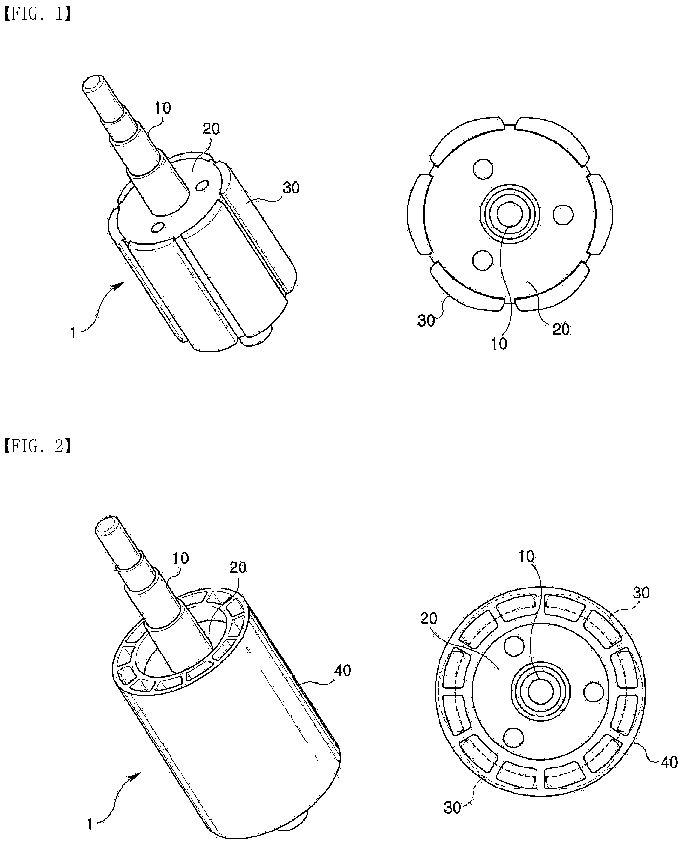

The rotor of a general motor is now described with reference to FIGS. 1 and 2. A rotating shaft 10 is installed at the center of the rotor 1, the outer circumferential surface of the rotating shaft 10 is surrounded by a rotor core 20, and magnets 30 configured to generate magnetic force to drive the rotor 1 are coupled to the outer circumferential surface of the rotor core 20.

Since the magnets 30 may be separated by centrifugal force when the rotor 1 is rotated, insert molding is performed on the outside of the magnets 30 in order to prevent the separation.

By the insert molding, a mold 40 is filled through a circular mold, the mold 40 is hardened over time, and the rotor 1 is formed in a form surrounding the magnets 30.

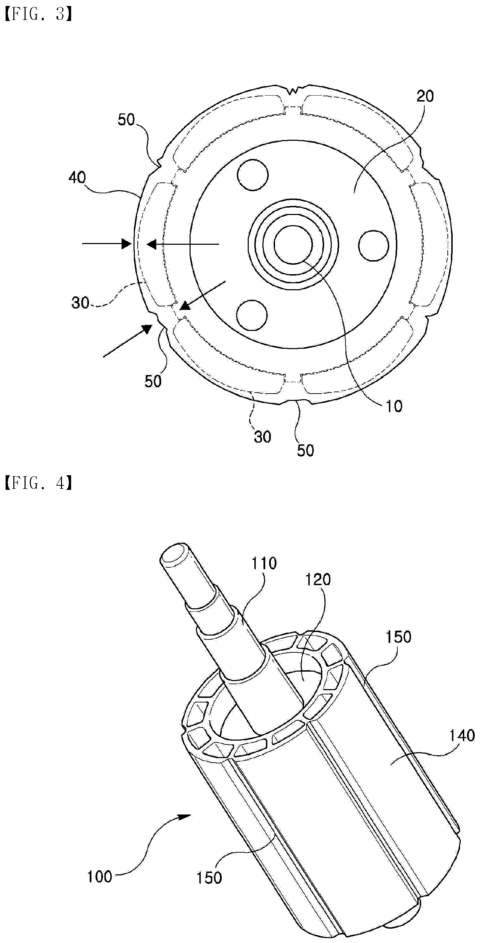

However, as shown in FIG. 3, in the process of performing insert molding on the rotor 1, the thickness of the mold 40 outside the magnets 30 and the thickness of the mold 40 between the magnets 30 are different, and thus the hardening speeds thereof are different from each other, with the result that deformation occurs in the thicker side of the mold 40.

In other words, there occurs a phenomenon in which the mold 40 in the portion of the rotor 1 between the magnets 30 is recessed.

As shown in the drawing, irregularities 50 are generated on the outer circumferential surface of the mold 40.

Therefore, as described above, due to the deformation of the mold 40, the quality of products deteriorates and product defects occur.

Furthermore, as described above, the irregularities 50 generated on the outer circumferential surface of the mold 40 of the rotor 1 form a weak portion of the rotor 1, so that the stiffness of the overall rotor 1 is affected. Accordingly, a problem arises in that the durability of the rotor 1 is deteriorated.

As a conventional technology for mitigating the above problems, Korean Patent No. 10-1728543 discloses a rotor for a motor.

The rotor for a motor according to the above-described conventional technology includes: a rotating shaft 110; a rotor core 120 configured to surround the outer circumferential surface of the rotating shaft 110; a plurality of magnets 130 disposed on the outer circumferential surface of the rotor core 120 and configured to generate magnetic force; and a mold 140 configured to surround the magnets 130 and the rotor core 120 exposed between the magnets 130 through insert molding. A groove 150 formed in a direction identical to the longitudinal direction of the magnets 130 is formed between each pair of adjacent magnets 130 in the mold 140. The grooves 150 reduce the thickness of the mold 140 between the magnets 130. It is characterized in that the difference with respect to the thickness of the mold 140 outside the magnets 130 is maintained within 30%.

However, the above-described conventional technology has a problem that natural demagnetization loss occurs because the cooling efficiency of the rotor is low.

Furthermore, in the conventional technology, a problem arises in that demagnetization loss occurs due to breakage, such as magnetization of the magnet and the breaking of the edge of magnets during embedding.

Furthermore, the PMG-type structures, such as that of the conventional technology, use only cross sections. Accordingly, they have problems in that they do not take full advantage of the Gauss magnetic nature and incur significantly high manufacturing cost because they require large magnets according to the capacity calculation.

EP3402045A1 discloses a permanent magnet module for a rotor that is configured to be mounted to a rim of the rotor and that comprises a metallic main body, a first permanent magnet component, and a first non-magnetic component. US 3221194 A discloses rotor assembly including a centrally located tubular core, circular in cross section, and which is held in assembled relation with a pair of end plates having integral hubs adapted to support bars on their outer peripheries. DE 3023743 A1 discloses a pole wheel having a magnetic system inserted in the periphery of the wheel as a preformed module.

### SUMMARY

The present invention has been conceived to overcome the above-described problems, and an object of the present invention is to provide a thin-plate module horseshoe-type PMG rotor for a motor, in which a core is divided into an iron core and a pole plate core without being molded and magnets are assembled therebetween.

The invention refers to a thin-plate modular horseshoe-type permanent magnet rotor, for a motor, as defined in the independent claim 1.

The following optional aspects of the invention are defined in the appended dependent claims.

The non-conductor shaft may be made of an aluminum material.

Each of the parts of the iron core may be configured such that an arc-shaped inner ground surface is formed to come into contact with the outer circumferential surface of the non-conductor shaft, two magnet attachment surfaces bent by 135° are formed on the surface opposite to the inner ground surface, a recessed space internally recessed is formed in both outer side ends of the magnet attachment surface, a first rail groove configured to extend in a T shape may be formed by cutting the center bent corner of the magnet attachment surfaces in a longitudinal direction, and a location guide protrusion configured to be engaged with the location guide groove of the non-conductor shaft may be formed on the inner ground surface.

Each of the first core fixing means may include a first plate-shaped nut configured to simultaneously press and come into contact with both side ends of two opposite parts of the iron core in a longitudinal direction at a 4-divided boundary of the iron core, and a first fastening means configured to fix the first plate-shaped nut to the non-conductor shaft.

Each of the boundary guide pins may be a plate member that has an I-shaped cross section and extends in the longitudinal direction of the iron core.

Each of the magnets may be formed by combining a plurality of sub-unit permanent magnets.

Each of the parts of the pole plate core may be configured to form an outer ground surface in an arc shape, to form two magnet facing surfaces, bent inward by 135°, on the inner surface of the outer ground surface, to form stop protrusions, recessed inward, on both ends of the outer ground surface, and to form a second rail groove, configured such that the inside thereof is expanded in a T-shape, by cutting the bent corners of magnet facing surfaces in a longitudinal direction.

Each of the second core fixing means may include a second plate-shaped nut configured to be inserted into the first rail groove of the iron core in a longitudinal direction, a pressing member configured to be inserted into the stop protrusion of each of the parts of the pole plate core in the longitudinal direction, and a second fastening means configured to pass through the pressing member and to be screwed with a second plate-shaped nut to press and fix each of the parts of the pole plate core.

A first cooling passage configured such that cooling air circulates therethrough may be formed using the recessed space of the iron core, a second cooling passage configured such that cooling air circulates therethrough may be formed in the inner center of each of the parts of the pole plate core in which the boundary guide pin is installed, a third cooling passage configured such that cooling air circulates therethrough may be formed at both ends of each of the parts of the pole plate core, and a plurality of fourth cooling passages configured to pass through the iron core in a longitudinal direction may be formed.

### BRIEF DESCRIPTION OF THE DRAWINGS

The above and other objects, features, and advantages of the present invention will be more clearly understood from the following detailed description taken in conjunction with the accompanying drawings, in which:
FIG. 1 shows perspective and plan views of a rotor for a general motor, according to a conventional technology.
FIG. 2 shows perspective and plan views of a state in which insert molding has been applied to the rotor for a general motor;
FIG. 3 is a diagram showing a state in which the mold of the general rotor has been deformed;
FIG. 4 is a perspective view showing a rotor for a motor according to a conventional technology;

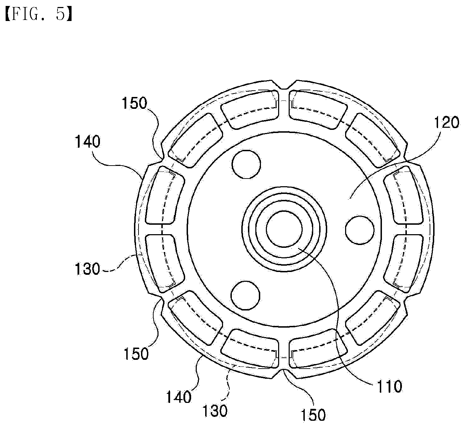

FIG. 5 is a diagram showing the mold of the rotor according to the conventional technology;
FIG. 6 is an exploded perspective view showing a thin-plate module horseshoe-type PMG rotor for a motor according to the present invention;
FIG. 7 is an assembled perspective view showing the thin-plate module horseshoe-type PMG rotor for a motor according to the present invention; and
FIG. 8 is a magnetic force diagram showing the thin-plate module horseshoe-type PMG rotor for a motor according to the present invention.

### DETAILED DESCRIPTION

An embodiment of the present invention will be described in detail below with reference to the accompanying drawings.

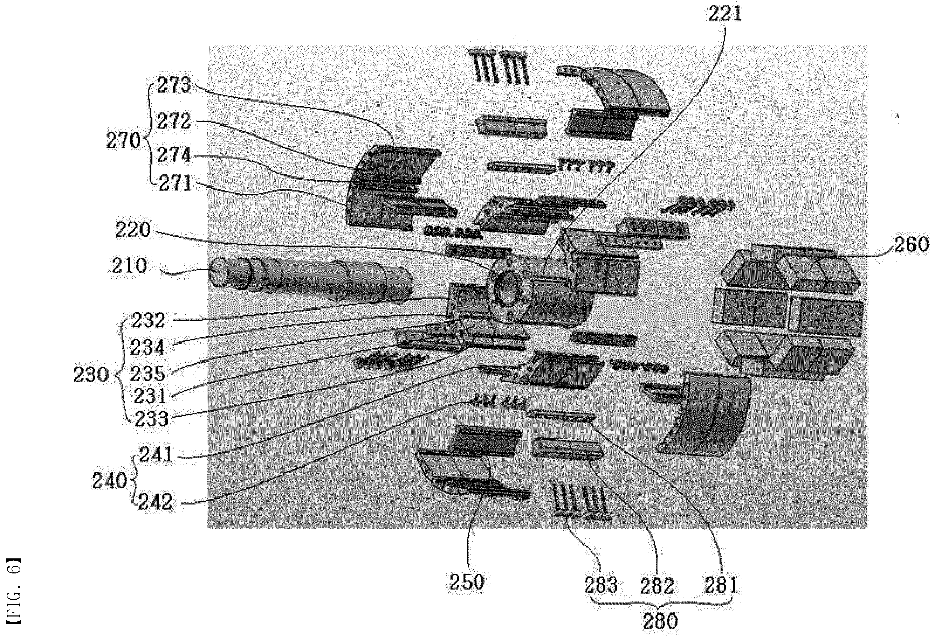

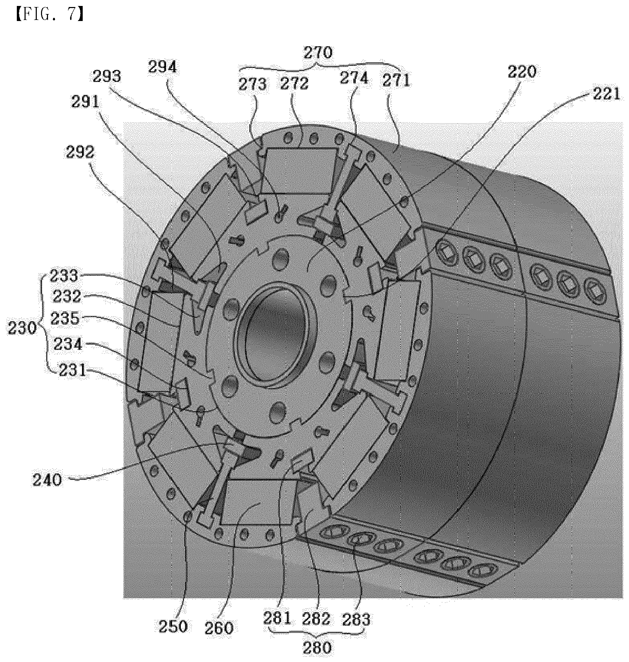

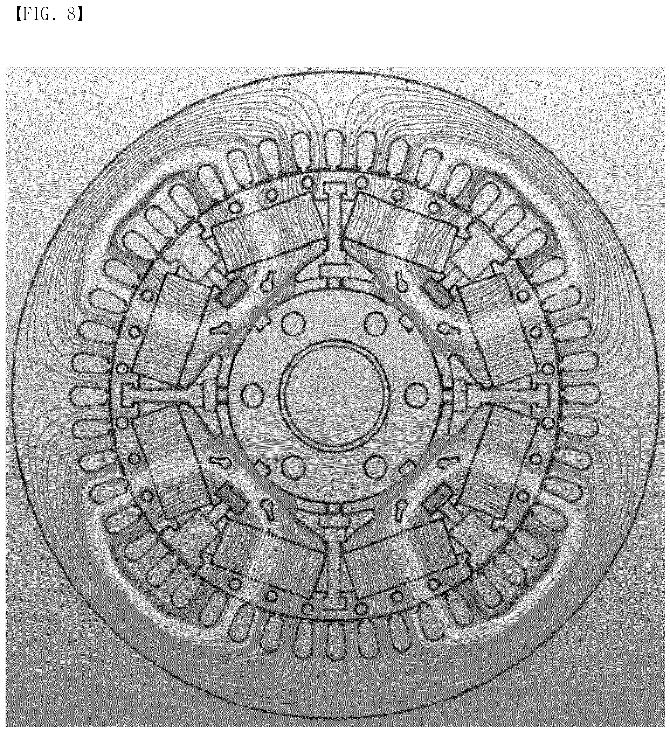

FIG. 6 is an exploded perspective view showing a thin-plate module horseshoe-type PMG rotor for a motor according to the present invention, FIG. 7 is an assembled perspective view showing the thin-plate module horseshoe-type PMG rotor for a motor according to the present invention, and FIG. 8 is a magnetic force diagram showing the thin-plate module horseshoe-type PMG rotor for a motor according to the present invention.

Referring to FIGS. 6 to 8, the thin-plate module horseshoe-type PMG rotor for a motor according to the present invention basically includes a main shaft 210, a non-conductor shaft 220, first core fixing means 240, boundary guide pins 250, magnets 260, a pole plate core 270, and second core fixing means 280.

The main shaft 210 serves as an output shaft that outputs the rotational force of the rotor to the outside, and is a round rod-shaped member fabricated in the longitudinal direction thereof.

Next, the non-conductor shaft 220 will be described.

The main shaft 210 is axially coupled into the cylindrical center portion of the non-conductor shaft 220, and a plurality of location guide grooves 221 is formed on the outer surface of the non-conductor shaft 220 in the longitudinal direction thereof. The location guide grooves 221 are shaped in the form of slit grooves cut in the longitudinal direction thereof.

In this case, the non-conductor shaft 220 may be made of an aluminum material.

Next, an iron core 230 will be described.

The iron core 230 is divided into four parts and coupled to the outer circumferential surface of the non-conductor shaft 220.

Each of the parts of the iron core 230 is configured such that an arc-shaped inner ground surface 231 is formed to come into contact with the outer circumferential surface of the non-conductor shaft 220, two magnet attachment surfaces 232 bent by 135° are formed on a surface opposite to the inner ground surface 231, a recessed space 233 internally recessed is formed in both outer side ends of the magnet attachment surface 232, a first rail groove 234 configured to extend in a T shape is formed by cutting the center bent corner of the magnet attachment surfaces 232 in the longitudinal direction, and a location guide protrusion 235 configured to be engaged with the location guide groove 221 of the non-conductor shaft 220 is formed on the inner ground surface 231.

In this case, a plurality of fourth cooling passages 294 may be formed to pass through the iron core 230 in the longitudinal direction.

Next, each of the first core fixing means 240 will be described.

The first core fixing means 240 fixes both side ends of two adjacent parts of the iron core 230 to the non-conductor shaft 220 by pressing both side ends of two adjacent parts of the iron core 230 at a four-divided boundary of the iron core 230.

The first core fixing means 240 includes a first plate-shaped nut 241 configured to simultaneously press and come into contact with both side ends of two opposite parts of the iron core 230 in the longitudinal direction at a 4-divided boundary of the iron core 230, and a first fastening means 242 configured to fix the first plate-shaped nut 241 to the non-conductor shaft 220.

Next, each of the boundary guide pins 250 will be described.

The boundary guide pin 250 is coupled to form a longitudinal wall outside the first core fixing means 240.

The boundary guide pin 250 is a plate member that has an I-shaped cross section and extends in the longitudinal direction of the iron core 230.

Next, the magnets 260 will be described.

The magnets 260 are attached in the eight directions of the outer surfaces of the iron core 230. Each of the magnets 260 may be composed of a single permanent magnet, or may be formed by combining a plurality of sub-unit permanent magnets, as disclosed in the accompanying drawings.

Next, the pole plate core 270 will be described.

The pole plate core 270 is divided into four parts to surround the magnets 260.

Each of the parts of the pole plate core 270 is configured to form an outer ground surface 271 in an arc shape, to form two magnet facing surfaces 272, bent inward by 135°, on the inner surface of the outer ground surface 271, to form stop protrusions 273, recessed inward, on both ends of the outer ground surface 271, and to form a second rail groove 274, configured such that the inside thereof is expanded in a T-shape, by cutting the bent corners of the magnet facing surfaces 272 in the longitudinal direction.

Next, the second core fixing means 280 will be described.

The second core fixing means 280 fixes the electrode plate core 270 to the iron core 230 by compressing the pole plate core 270 onto the iron core 230.

Each of the second core fixing means 280 includes a second plate-shaped nut 281 configured to be inserted into the first rail groove 234 of the iron core 230 in the longitudinal direction, a pressing member 282 configured to be inserted into the stop protrusion 273 of each of the parts of the pole plate core 270 in the longitudinal direction, and a second fastening means 283 configured to pass through the pressing member 282 and to be screwed with the second plate-shaped nut 281 to press and fix each of the parts of the pole plate core 270.

According to the present invention described above, the heat generation of the rotor may be minimized by forming a plurality of cooling passages as follows:
According to the present invention, a first cooling passage 291 configured such that cooling air circulates therethrough may be formed using the recessed space 233 of the iron core 230, a second cooling passage 292 configured such that cooling air circulates therethrough may be formed in the inner center of each of the parts of the pole plate core 270 in which the boundary guide pin 250 is installed, a third cooling passage 293 configured such that cooling air circulates therethrough may be formed at both ends of each of the parts of the pole plate core 270, and a plurality of fourth cooling passages 294 configured to pass through the iron core 230 in the longitudinal direction may be formed.

In the above-described present invention, the core is not manufactured by molding, but is divided into the iron core 230 and the pole plate core 270 and then the magnets 260 are assembled therebetween. The magnets 260 may be disposed to be exposed to the surface. This method has an advantage in that there is no natural generation of demagnetization compared to the existing core assembly method.

Furthermore, according to the present invention, the plurality of cooling passages 291, 292 and 293 is naturally formed in a structure in which the iron core 230, the magnets 260, and the pole plate core 270 are assembled together, and thus an advantage arises in that the heat of the rotor is naturally cooled.

Furthermore, according to the present invention, the main parts of the rotor are manufactured by assembly, so that a manufacturing process may be simplified and manufacturing efficiency may be increased.

Furthermore, according to the present invention, the main parts of the rotor may be easily disassembled and then replaced or repaired, so that advantages arise in that maintenance and repair are facilitated and management is also facilitated.

Furthermore, according to the present invention, as shown in FIG. 8, the flow of magnetic force may be induced in a U-shape by disposing the boundary guide pins 250. FIG. 8 shows the flow of magnetic force as in the case where four U-shaped horseshoe magnets are formed.

Accordingly, the present invention has advantages in that there may be prevented the defect in which the corners of magnets are broken when the molding core of the conventional rotor is assembled, it is easy to handle the rotor, and the demagnetization phenomenon at the corners of the magnets may be prevented.

Accordingly, according to the present invention, natural magnetic demagnetization loss is minimized, so that circulating magnetic force may be formed according to an increase in accelerated rotation.

Furthermore, according to the present invention, the flat magnets (magnets embedded in a molding frame) combined to have each salient polarity through surface adhesion and close tightening without demagnetization on the surfaces of the magnets and inside the conductor core generate magnetic force inside the inner frame of the iron core as in horseshoe magnets in the manner of being cyclical and uniform in the polarity ratio.

In addition, there is an advantage in that in order to reduce cost, several small magnets may be provided and combined and a winding salient pole-type brushless exciter functional element part is not required.

Although an example of a 4-pole type rotor has been shown as the thin plate module horseshoe-type PMG rotor for a motor according to the present invention through the example of FIGS. 6 to 8 above, there may be formed various types of magnetic force ranging from 2 to N poles.

According to the present invention, a combination of a various types of magnets may be possible, so that a combination of a plurality of small, rectangular, or square magnets 260 for each capacity may be easily selected, which allows the magnets to be easily inserted and magnetized inside the molding core during combination for each dimension, thereby providing the advantage of forming large horseshoe-shaped magnetic force.

According to the above-described present invention, there may be dealt with rotors of all capacities from small to medium-large capacity rotors, mass production is easy, and manufacturing cost and prime cost are reduced.

The embedded magnets of the present invention may be embedded in the upper left and right poles at the center of the polarity, thus conforming to the theory of electromotive force according to the electromotive force of the driving field.

Moreover, the magnet embedding method of the present invention generates circulating magnetic force to form polarity using a negative electrode (-) and a positive electrode (+), magnet-embedded thin plate module (U-type) horseshoe-shaped magnetic force is stable because it may utilize the magnet nature of negative (-) and positive (+) polarities, and stator power obtained by the driving of the rotor is generated as the power of power generation.

According to the above-described present invention, the core is not manufactured by molding, but is divided into the iron core and the pole plate core and then the magnets are assembled therebetween. The magnets may be disposed to be exposed to the surface. This method has no natural generation of demagnetization compared to the existing core assembly method. The number of cooling passages is naturally formed in the assembly structure of the iron core, magnets, and pole plate core, and thus the heat of the rotor may be naturally cooled. The main parts of the rotor are manufactured by assembly, and thus there are achieved the effects of simplifying the manufacturing process and improving manufacturing efficiency.

The present invention is not limited to the specific preferred embodiments described above. Alterations and/or modifications of the described embodiments are contemplated as being alternative forms of the invention as far as they do not depart from the scope of the invention, which is defined by the appended claims.

## Claims

1. A thin-plate modular horseshoe-type permanent magnet rotor for a motor, the rotor comprising:
a main shaft (210);
a magnetically non-conductive shaft (220) axially coupled to an outer circumference of the main shaft (210);
an iron core (230) circumferentially divided into four equal parts and coupled to an outer circumferential surface of the magnetically non-conductive shaft (220);
first core fixing means (240) for pressing and fixing both circumferential side ends of each part of the iron core (230) to the magnetically non-conductive shaft (220) along four boundaries of the iron core (230);
magnets (260) attached to an outer surface of the iron core (230) in eight radial directions;
a pole plate core (270) circumferentially divided into four equal parts coupled to surround the magnets (260), wherein each part of the pole plate core (270) is coupled to magnets attached in two radial directions to two adjacent parts of the iron core (230);
second core fixing means for pressing and fixing both circumferential ends of each part of the pole plate core (270) to the iron core (230),
boundary guide pins (250) consisting of plate members coupled to the iron core (230) and the pole plate core(270) to form a wall outside the first core fixing means (240) in an axial direction.

2. The rotor of claim 1, wherein the non-conductor shaft (220) is made of an aluminum material.

3. The rotor of claim 1, wherein each of parts of the iron core (230) is configured such that an arc-shaped inner ground surface (231) is formed to come into contact with an outer circumferential surface of the non-conductor shaft (220), two magnet attachment surface (232) forming an angle of 135° are formed on a surface opposite to the inner ground surface (231), a recessed space (233) internally recessed is formed in both outer side ends of the magnet attachment surface (232), a first rail groove (234) configured to extend in a T shape is formed by cutting a center bent corner of the magnet attachment surface (232) in a longitudinal direction, and a location guide protrusion (235) configured to be engaged with the location guide groove (150) of the non-conductor shaft (220) is formed on the inner ground surface.

4. The rotor of claim 1, wherein each of the first core fixing means comprises a first plate-shaped nut (241) configured to simultaneously press and come into contact with both side ends of two opposite parts of the iron core (230) in a longitudinal direction at a 4-divided boundary of the iron core (230), and a first fastening means configured to fix the first plate-shaped nut (241) to the non-conductor shaft (220).

5. The rotor of claim 1, wherein each of the boundary guide pin (250) is a plate member that has an I-shaped cross section and extends in a longitudinal direction of the iron core (230).

6. The rotor of claim 1, wherein each of the magnets (260) is formed by combining a plurality of sub-unit permanent magnets (260).

7. The rotor of claim 1, wherein each of parts of the pole plate core (270) is configured to form an outer ground surface (271) in an arc shape, to form two magnet facing surfaces, bent inward by 135°, on an inner surface of the outer ground surface (271), to form stop protrusion (273), recessed inward, on both ends of the outer ground surface (271), and to form a second rail groove (274), configured such that an inside thereof is expanded in a T-shape, by cutting bent corners of magnet facing surfaces in a longitudinal direction.

8. The rotor of claim 1, wherein each of the second core fixing means comprises a second plate-shaped nut (281) configured to be inserted into the first rail groove (234) of the iron core (230) in a longitudinal direction, a pressing member (282) configured to be inserted into the stop protrusion (273) of each of the parts of the pole plate core (270) in the longitudinal direction, and a second fastening means configured to pass through the pressing member (282) and to be screwed with a second plate-shaped nut (281) to press and fix each of the parts of the pole plate core (270).

9. The rotor of claim 3, wherein a first cooling passage configured such that cooling air circulates therethrough is formed using the recessed space (233) of the iron core (230), a second cooling passage configured such that cooling air circulates therethrough is formed in an inner center of each of the parts of the pole plate core (270) in which the boundary guide pin (250) is installed, a third cooling passage configured such that cooling air circulates therethrough is formed at both ends of each of the parts of the pole plate core (270), and a plurality of fourth cooling passages configured to pass through the iron core (230) in a longitudinal direction is formed.

## Patentansprüche

1. Dünnwandiger, modularer, hufeisenförmiger Permanentmagnetrotor für einen Motor, wobei der Rotor aufweist:
eine Hauptwelle (210);
eine magnetisch nicht leitende Welle (220), die axial mit einem Außenumfang der Hauptwelle (210) verbunden ist,
einen Eisenkern (230), der in Umfangsrichtung in vier gleiche Teile unterteilt ist und mit einer äußeren umlaufenden Oberfläche der magnetisch nicht leitenden Welle (220) verbunden ist,
erste Kernbefestigungsmittel (240) zum Pressen und Befestigen beider umlaufender Seitenenden jedes Teils des Eisenkerns (230) an der magnetisch nicht leitenden Welle (220) entlang vier Begrenzungen des Eisenkerns (230);
Magnete (260), die an einer äußeren Oberfläche des Eisenkerns (230) in acht radialen Richtungen angebracht sind,
einen Polplattenkern (270), der in Umfangsrichtung in vier gleiche Teile unterteilt ist, die so verbunden sind, dass sie die Magnete (260) umgeben, wobei jeder Teil des Polplattenkerns (270) mit Magneten verbunden ist, die in zwei radialen Richtungen an zwei benachbarten Teilen des Eisenkerns (230) angebracht sind,
zweite Kernbefestigungsmittel zum Pressen und Befestigen beider umlaufender Enden jedes Teils des Polplattenkerns (270) am Eisenkern (230),
Begrenzungsführungsstifte (250), bestehend aus Plattenelementen, die mit dem Eisenkern (230) und dem Polplattenkern (270) verbunden sind, um eine Wand außerhalb von den ersten Kernbefestigungsmittel (240) in axialer Richtung zu bilden.

2. Rotor nach Anspruch 1, wobei die nicht leitende Welle (220) aus einem Aluminiummaterial besteht.

3. Rotor nach Anspruch 1, wobei jeder der Teile des Eisenkerns (230) derart eingerichtet ist, dass eine bogenförmige innere Bodenfläche (231) gebildet ist, um mit einer äußeren umlaufenden Oberfläche der nicht leitenden Welle (220) in Kontakt zu kommen, zwei Magnetbefestigungsflächen (232), die einen Winkel von 135° bilden, auf einer Oberfläche gegenüber der inneren Bodenfläche (231) ausgebildet sind, ein vertiefter Raum (233) innen vertieft in beiden äußeren Seitenenden der Magnetbefestigungsfläche (232) ausgebildet ist, eine erste Schienennut (234), die dazu eingerichtet ist, sich in T-Form zu erstrecken, durch Schneiden einer im Mittelpunkt gebogenen Ecke der Magnetbefestigungsfläche (232) in Längsrichtung gebildet ist, und ein Positionsführungsvorsprung (235), der dazu eingerichtet ist, mit der Positionsführungsnut (150) der nicht leitenden Welle (220) in Eingriff zu kommen, auf der inneren Bodenfläche gebildet ist.

4. Rotor nach Anspruch 1, wobei jedes der ersten Kernbefestigungsmittel eine erste plattenförmige Nut (241), die dazu eingerichtet ist, gleichzeitig Druck auf beide Seitenenden von zwei gegenüberliegenden Teilen des Eisenkerns (230) in einer Längsrichtung an einer viergeteilten Begrenzung des Eisenkerns (230) auszuüben und mit diesen in Kontakt zu kommen, und ein erstes Befestigungsmittel aufweist, das dazu eingerichtet ist, die erste plattenförmige Nut (241) an der nicht leitenden Welle (220) zu befestigen.

5. Rotor nach Anspruch 1, wobei jeder der Begrenzungsführungsstifte (250) ein Plattenelement ist, das einen I-förmigen Querschnitt aufweist und sich in Längsrichtung des Eisenkerns (230) erstreckt.

6. Rotor nach Anspruch 1, wobei jeder der Magnete (260) durch Kombinieren einer Vielzahl von untergeordneten Permanentmagneten (260) gebildet ist.

7. Rotor nach Anspruch 1, wobei jeder der Teile des Polplattenkerns (270) dazu eingerichtet ist, eine äußere Bodenfläche (271) in einer Bogenform zu bilden, zwei Magneten zugewandte Oberflächen, die um 135° nach innen gebogen sind, auf einer inneren Oberfläche der äußeren Bodenfläche (271) zu bilden, einen nach innen vertieften Anschlagvorsprung (273) an beiden Enden der äußeren Bodenfläche (271) zu bilden und eine zweite Schienennut (274) zu bilden, die so eingerichtet ist, dass eine Innenseite davon T-förmig erweitert ist, indem gebogene Ecken der Magneten zugewandten Oberflächen in Längsrichtung geschnitten werden.

8. Rotor nach Anspruch 1, wobei jedes der zweiten Kernbefestigungsmittel eine zweite plattenförmige Nut (281), die dazu eingerichtet ist, in Längsrichtung in die erste Schienennut (234) des Eisenkerns (230) eingesetzt zu werden, ein Presselement (282), das dazu eingerichtet ist, in Längsrichtung in den Anschlagvorsprung (273) jedes der Teile des Polplattenkerns (270) eingesetzt zu werden, und ein zweites Befestigungsmittel, das dazu eingerichtet ist, durch das Presselement (282) hindurchgeführt und mit einer zweiten plattenförmigen Nut (281) verschraubt zu werden, um jedes der Teile des Polplattenkerns (270) zu pressen und zu fixieren.

9. Rotor nach Anspruch 3, wobei ein erster Kühlkanal, der so eingerichtet ist, dass Kühlluft durch diesen zirkuliert, unter Verwendung des vertieften Raums (233) des Eisenkerns (230) gebildet ist, ein zweiter Kühlkanal, der so eingerichtet ist, dass Kühlluft durch diesen hindurch zirkuliert, in einem inneren Mittelpunkt jedes der Teile des Polplattenkerns (270) gebildet ist, in dem der Begrenzungsführungsstift (250) installiert ist, ein dritter Kühlkanal, der so eingerichtet ist, dass Kühlluft durch diesen hindurch zirkuliert, an beiden Enden jedes der Teile des Polplattenkerns (270) ausgebildet ist, und eine Vielzahl von vierten Kühlkanälen, die so eingerichtet sind, dass sie durch den Eisenkern (230) in einer Längsrichtung verlaufen, ausgebildet ist.

## Revendications

1. Rotor à aimant permanent en fer à cheval modulaire à plaque mince pour un moteur, le rotor comprenant :
un arbre principal (210) ;
un arbre non conducteur magnétiquement (220) couplé axialement à une circonférence extérieure de l'arbre principal (210) ;
un noyau de fer (230) divisé circonférentiellement en quatre parties égales et couplé à une surface circonférentielle extérieure de l'arbre non conducteur magnétiquement (220) ;
des premiers moyens de fixation de noyau (240) pour presser et fixer les deux extrémités de côté circonférentiel de chaque partie du noyau de fer (230) à l'arbre non conducteur magnétiquement (220) le long de quatre limites du noyau de fer (230) ;
des aimants (260) attachés à une surface extérieure du noyau de fer (230) dans huit directions radiales ;
un noyau de plaque polaire (270) divisé circonférentiellement en quatre parties égales couplées pour entourer les aimants (260), dans lequel chaque partie du noyau de plaque polaire (270) est couplée à des aimants attachés dans deux directions radiales à deux parties adjacentes du noyau de fer (230) ;
des seconds moyens de fixation de noyau pour presser et fixer les deux extrémités circonférentielles de chaque partie du noyau de plaque polaire (270) au noyau de fer (230),
des broches de guidage de limite (250) se composant d'éléments de plaque couplés au noyau de fer (230) et au noyau de plaque polaire (270) pour former une paroi à l'extérieur des premiers moyens de fixation de noyau (240) dans une direction axiale.

2. Rotor selon la revendication 1, dans lequel l'arbre non conducteur (220) est constitué d'un matériau d'aluminium.

3. Rotor selon la revendication 1, dans lequel chacune des parties du noyau de fer (230) est configurée de sorte qu'une surface de masse intérieure arquée (231) soit formée pour venir en contact avec une surface circonférentielle extérieure de l'arbre non conducteur (220), une surface d'attachement de deux aimants (232) formant un angle de 135° soit formée sur une surface opposée à la surface de masse intérieure (231), un espace évidé (233) à évidement interne soit formé aux deux extrémités de côté extérieur de la surface d'attachement d'aimants (232), une première rainure de rail (234) configurée pour s'étendre en forme de T soit formée en découpant un coin plié central de la surface d'attachement d'aimants (232) dans une direction longitudinale, et une saillie de guidage d'emplacement (235) configurée pour être mise en prise avec la rainure de guidage d'emplacement (150) de l'arbre non conducteur (220) soit formée sur la surface de masse intérieure.

4. Rotor selon la revendication 1, dans lequel chacun des premiers moyens de fixation de noyau comprend un premier écrou en forme de plaque (241) configuré pour simultanément presser et venir en contact avec les deux extrémités de côté de deux parties opposées du noyau de fer (230) dans une direction longitudinale au niveau d'une limite divisée en quatre du noyau de fer (230), et un premier moyen de serrage configuré pour fixer le premier écrou en forme de plaque (241) à l'arbre non conducteur (220).

5. Rotor selon la revendication 1, dans lequel chaque broche de guidage de limite (250) est un élément de plaque présentant une coupe transversale en forme de 1 et s'étend dans une direction longitudinale du noyau de fer (230).

6. Rotor selon la revendication 1, dans lequel chacun des aimants (260) est formé par la combinaison d'une pluralité d'aimants permanents de sous-unités (260).

7. Rotor selon la revendication 1, dans lequel chacune des parties du noyau de plaque polaire (270) est configurée pour former une surface de masse extérieure (271) arquée, pour former deux surfaces faisant face à l'aimant, pliées vers l'intérieur de 135°, sur une surface intérieure de la surface de masse extérieure (271), pour former une saillie de butée (273), évidée vers l'intérieur, aux deux extrémités de la surface de masse extérieure (271), et pour former une seconde rainure de rail (274), configurée de sorte qu'un intérieur de celle-ci s'étende en forme de T, en découpant des coins pliés de surface faisant face à l'aimant dans une direction longitudinale.

8. Rotor selon la revendication 1, dans lequel chacun des seconds moyens de fixation de noyau comprend un second écrou en forme de plaque (281) configuré pour être inséré dans la première rainure de rail (234) du noyau de fer (230) dans une direction longitudinale, un élément de pression (282) configuré pour être inséré dans la saillie de butée (273) de chacune des parties du noyau de plaque polaire (270) dans la direction longitudinale, et un second moyen de serrage configuré pour passer à travers l'élément de pression (282) et pour être vissé avec un second écrou en forme de plaque (281) pour presser et fixer chacune des parties du noyau de plaque polaire (270).

9. Rotor selon la revendication 3, dans lequel un premier passage de refroidissement configuré de sorte que de l'air de refroidissement circule à travers celui-ci est formé à l'aide de l'espace évidé (233) du noyau de fer (230), un deuxième passage de refroidissement configuré de sorte que de l'air de refroidissement circule à travers celui-ci est formé dans un centre intérieur de chacune des parties du noyau de plaque polaire (270) dans lequel la broche de guidage de limite (250) est installée, un troisième passage de refroidissement configuré de sorte que de l'air de refroidissement circule à travers celui-ci est formé aux deux extrémités de chacune des parties du noyau de plaque polaire (270) et une pluralité de quatrièmes passages de refroidissement configurés pour passer à travers le noyau de fer (230) dans une direction longitudinale sont formés.
